# EUROPÄISCHE PATENTSCHRIFT

(11) **EP 1 177 942 B1**
(45) Veröffentlichungstag und Bekanntmachung des Hinweises auf die Patenterteilung: **03.09.2008**
(21) Anmeldenummer: 01117983.5
(22) Anmeldetag: 25.07.2001
(51) Int. Cl.: B60Q 1/42

(54) **Rückstelleinrichtung für einen Schalter eines Kraftfahrzeuges**
Switch reset device for vehicle
Dispositif de rappel pour interrupteur de véhicule automobile

(30) Priorität: 03.08.2000 DE 10037760
(43) Veröffentlichungstag der Anmeldung: 06.02.2002
(60) Teilanmeldung: 08005405.9
(73) Patentinhaber: Delphi Technologies Inc., Troy, MI 48007 (US)
(72) Erfinder: Rudolph, Gerd, 55459 Aspisheim (DE)
(74) Vertreter: Becker, Bernd

(56) Entgegenhaltungen:
- DE-C- 720 718
- US-A- 4 097 700
- US-A- 4 125 827
- US-A- 4 801 770
- US-A- 4 900 946
- US-A- 5 216 399

## Beschreibung

Die Erfindung bezieht sich auf eine Rückstelleinrichtung für einen Schalter eines Kraftfahrzeuges, insbesondere eines Blinkerschalters, mit einem schwenkbar gelagerten, verrastbaren Schalthebel mit einem federbelasteten Rastelement, das mit mindestens einer Schaltstellung einer gehäuseseitigen Rastkurve zusammenwirkt, wobei eine elektromechanische Verstelleinrichtung rechnergesteuert die Verrastung des Schalthebels aufhebt.

Die den nächstliegenden Stand der Technik bildende US-A-4 900 946 offenbart eine Rückstelleinrichtung für einen Schalter eines Kraftfahrzeuges mit einem schwenkbar gelagerten, verrastbaren Schalthebel mit einem federbelasteten Rastelement, das mit mindestens einer Schaltstellung einer gehäuseseitigen Rastkurve zusammenwirkt, wobei eine elektromechanische Verstelleinrichtung rechnergesteuert die Verrastung des Schalthebels aufhebt. Ein Kolben ist in einer Spule gelagert, der sich einerseits auf einer gefedert gelagerten Scheibe abstützt und andererseits eine in einem elastischen Element angeordnete Rastkurve trägt, in der ein Rastelement eines Schalters gleitet. Die federnde Lagerung des Rastelementes ist durch eine in Axialrichtung verlagerbare Anordnung des als Zugschalter ausgebildeten Betätigungselementes realisiert. Um eine Verrastung des Rastelementes zulösen, wird die Spule mit Spannung beaufschlagt, worauf sich der Kolben in der Spule aufgrund der nunmehr vorhandenen Magnetwirkung verlagert und dabei die Rastkurve mitnimmt.

Des Weiteren zeigt die US-A-5 216 399 eine Rückstelleinrichtung für einen Schalter eines Kraftfahrzeuges mit einem schwenkbar gelagerten, verrastbaren Schalthebel. Eine Rastkurve des Schalters ist an einem Halter befestigt, der wiederum mit einem Elektromagneten verbunden ist.

Aus der DE-C-27 21 879 ist ein Lenkstockschalter mit einem getasteten Blinkerschalter bekannt, dessen Schalthebel für das Fahrbahnwechselblinken oder für die Fahrtrichtungsanzeige nach rechts und nach links jeweils nacheinander einen oder zwei zugeordnete Tastschalter beaufschlagt. Der Einschaltzustand des Blinkerschalters wird mittels einer elektronischen Halteeinrichtung gespeichert und durch eine elektronische Rücksetzeinrichtung wird die Halteeinrichtung zurückgesetzt. Der Schalthebel wird nach seiner Betätigung durch eine federbeaufschlagte Schaltbrücke selbsttätig in eine Neutralstellung zurückgestellt.

Im weiteren offenbart die DE 197 58 288 A1 eine Vorrichtung zur drehrichtungsgekoppelten Rückstellung eines mit einer Lenksäule zusammenwirkenden Blinkerschalters in einem Kraftfahrzeug mit einem um eine Drehachse schwenkbaren Blinkerhebel, wobei der Blinkerhebel jeweils in eine von zwei, in der gewünschten Blinkstellung entsprechende Betriebstellung schwenkbar ist. Zur Führung des linken Blinkerhebelendes ist eine ortsfest angeordnete Kulisse vorgesehen. Der Blinkerschalter umfasst zwei auf einem Rastelement angeordnete Rastungen, die über die Kulissenkontur hervorstehen und jeweils das Blinkerhebelende in einer Betriebstellung halten. Das Rastelement ist bewegbar, so dass jeweils eine Rastung zumindest bündig mit der Kulissenkontur abschließt und den in der Betriebstellung gehaltenen Blinkerhebel freigibt, wobei ein lenksäulenfestes Betätigungselement auf das Rastelement einwirkt und dieses verschwenkt. Der Blinkerschalter muss in unmittelbarer Nähe der Lenksäule angeordnet sein und zwischen dem Betätigungselement und dem Rastelement dürfen sich keine weiteren Bauteile befinden, um die Funktion der Vorrichtung sicherzustellen.

Darüberhinaus ist aus der DE 27 25 805 C2 eine Einrichtung zum Ausschalten eines Fahrtrichtungsanzeigers eines Kraftfahrzeuges nach einer Kurvenfahrt bekannt, wobei ortsfeste, mittels eines an der Lenksäule angebrachten Magneten magnetfeldgesteuerte Geber vorgesehen sind. Diesen Gebern ist ein elektronischer Drehrichtungsdiskriminator nachgeschaltet, der in Abhängigkeit von der Signalfolge der Geber beim Rückdrehen des Lenkrades nach einer Kurvenfahrt die Ausschaltung der Fahrtrichtungsanzeige bewirkt. Diese Einrichtung ist lediglich in Verbindung mit einem getasteten Blinkerschalter zu verwenden, da sie nicht mit einer Rastung zusammenwirkt, sondern lediglich die Fahrtrichtungsanzeige ausschaltet.

Ferner sind Wischer-/Wascherschalter für Kraftfahrzeuge bekannt, deren Schalthebel für die Front-Wischerfunktionen im und gegen den Uhrzeigersinn verschwenkbar in einem Gehäuse gelagert sind und für die Front/Wascher- und Heck Wischer-/ Wascherfunktionen sind die Schalthebel in und gegen die Richtung eines Armaturenbrettes verschwenkbar gelagert. Die Schalterfunktionen können sowohl mechanisch verrastend als auch getastet ausgeführt werden.

Es ist Aufgabe der Erfindung, eine Rückstelleinrichtung für einen Schalter eines Kraftfahrzeuges der eingangs genannten Art zu schaffen, die eine Aufhebung der Verrastung mit einem geringen mechanischen Aufwand ermöglicht.

Erfindungsgemäß wird die Aufgabe dadurch gelöst, dass die Verstelleinrichtung einen Elektromotor umfasst, der mit einem Getriebe gekoppelt ist, das wiederum über eine Gewindestange mit der Rastkurve in Verbindung steht.

Die Aufhebung der Verrastung des Schalters erfolgt somit nicht mittels einer kraftfahrzeugseitigen Rücksetzung sondern mittels der elektromechanischen Verstelleinrichtung, die dem Schalter direkt zugeordnet ist. Anstatt einer aufwendigen Mechanik zur Beaufschlagung der Rastung, die zwischen derselben und dem Kraftfahrzeug wirkt, erfolgt die Kopplung mit dem Kraftfahrzeug über den Bordrechner. Falls die Aufhebung der Verrastung in Abhängigkeit von dem Drehwinkel einer Lenksäule erfolgen soll, wie es beispielsweise bei einem Blinkerschalter erforderlich ist, muss der Schalter nicht in unmittelbarer Nähe der Lenksäule angeordnet und mechanisch mit dieser gekoppelt werden. Vielmehr wird der Drehwinkel der Lenksäule von dem Bordrechner erfasst, der gleichfalls das Setzen bzw. Nichtsetzen des Schalters erkennt. Falls ein vorbestimmter Drehwinkel erreicht ist, spricht der Bordrechner die Verstelleinrichtung zur Aufhebung der Verrastung des Schalters an. Der Bordrechner kann dies selbstverständlich auch beim Vorliegen anderer relevanter Daten, wie beispielsweise bei Ablauf einer vorgegebenen Zeitspanne oder bestimmter Reaktionen des Fahrers, veranlassen. Mit dem Getriebe lässt sich eine zur Beaufschlagung der Rastkurve erforderliche Übersetzung erzielen und darüber hinaus stellt der Elektromotor neben einer kontinuierlichen Beaufschlagung der Rastkurve auch die Übertragung relativ großer Kräfte sicher.

Bevorzugt beaufschlagt die Verstelleinrichtung die Rastkurve der Rastung und wirkt im wesentlichen senkrecht oder parallel zu einer Längsachse des Schalthebels. Die Verstelleinrichtung verursacht also lediglich geradlinige Bewegungen der Rastkurve, die einfacher zu realisieren sind als Schwenkbewegungen, die zur Betätigung des Schalthebels bei dessen Rücksetzung erforderlich wären.

Zweckmäßigerweise beaufschlagt die Verstelleinrichtung die Rastkurve kontinuierlich oder mittels eines Impulses. Falls zur Aufhebung der Verrastung die Rastkurve nur einen relativ geringen Weg zurücklegen muss, genügt ein stoßartiger Impuls der Verstelleinrichtung auf die Rastkurve, um das Rastelement des Schalthebels zurück zu bewegen, worauf die Rastkurve in ihre unverrastste Stellung zurückkehrt. Wenn das Zurücklegen relativ großer Wege oder eine relativ große Kraftübertragung erforderlich ist, beaufschlagt die Verstelleinrichtung die Rastkurve kontinuierlich.

Um eine kompakte Bauform und eine leicht handhabbare Einheit zur Verfügung zu stellen, ist vorteilhafterweise die Verstelleinrichtung in ein Gehäuse des Schalters integriert oder an demselben befestigt.

Um die Rastkurve aus einer bestimmten Stellung herauszubewegen und anschließend wieder in diese Stellung zurückzubringen, ist zweckmäßigerweise die Drehrichtung des Elektromotors rechnergesteuert umkehrbar. Hierbei speichert der Bordrechner die jeweils letzte Drehrichtung des Elektromotors.

Zur Realisierung einer zuverlässigen sowie einfach zu fertigenden Verbindung zwischen dem Elektromotor und der Rastkurve, greift zweckmäßigerweise die Gewindestange in ein Innengewinde ein, das in eine Rückwand oder eine Seitenwand der Rastkurve eingelassen ist.

Bevorzugt bewegt der Elektromotor nach dem Lösen der Verrastung des Schalthebels die Rastkurve rechnergesteuert in ihre Ausgangslage. Befindet sich beispielsweise die Rastkurve in ihrer Ausgangsstellung und der Schalthebel ist in einer seiner Schaltstellungen verrastet und die Verrastung soll aufgehoben werden, dann steuert der Bordrechner den Elektromotor in einer bestimmten Drehrichtung an, in der sich die Rastkurve zur Aufhebung der Verrastung des Schalthebels aus ihrer Ausgangslage bewegt. Der Bordrechner registriert anschließend, dass sich der Schalthebel in keiner seiner Schaltstellungen befindet und steuert den Elektromotor in entgegengesetzter Drehrichtung an, um die Rastkurve in ihre Ausgangslage zurückzustellen.
Bevorzugt ist der Bordrechner mit einem Lenkwinkelsensor gekoppelt und die Verstelleinrichtung betätigt in Abhängigkeit von einer Drehrichtung sowie einem Drehwinkel der Lenksäule die Rastkurve. Der mit der Lenksäule gekoppelte Lenkwinkelsensor erfasst permanent Drehrichtungs- und Drehwinkeländerungen der Lenksäule und liefert diese Daten zur Auswertung an den Bordrechner, der dann gegebenenfalls die Verstelleinrichtung beaufschlagt. Somit ist das Aufheben der Verrastung eines Blinkerschalters bei einer Drehrichtungsänderung der Lenksäule sichergestellt, ohne dass der Schalter in einem direkten mechanischen Kontakt zu der Lenksäule steht. Hierbei lassen sich den Messwerten des Lenkwinkelsensors selbstverständlich Toleranzbereiche zuordnen, so dass die Verstelleinrichtung nicht bei jeder noch so kleinen Drehrichtungsänderung von dem Bordrechner angesprochen wird.

Damit ein Herausspringen des federbelasteten Rastelementes aus dem Schalthebel beim Verschieben der Rastkurve zur Aufhebung der Verrastung wirksam verhindert wird, ist zweckmäßigerweise das Rastelement mitsamt der zugeordneten Druckfeder unverlierbar in dem Schalthebel gehalten. Hierbei ist das als Rasthülse ausgebildete Rastelement mit einem Bund versehen und in eine stirnseitige Stufenbohrung des Schalthebels eingesetzt.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand mehrerer Ausführungsbeispiele unter Bezugnahme auf die zugehörigen Zeichnungen näher erläutert. Es zeigen:

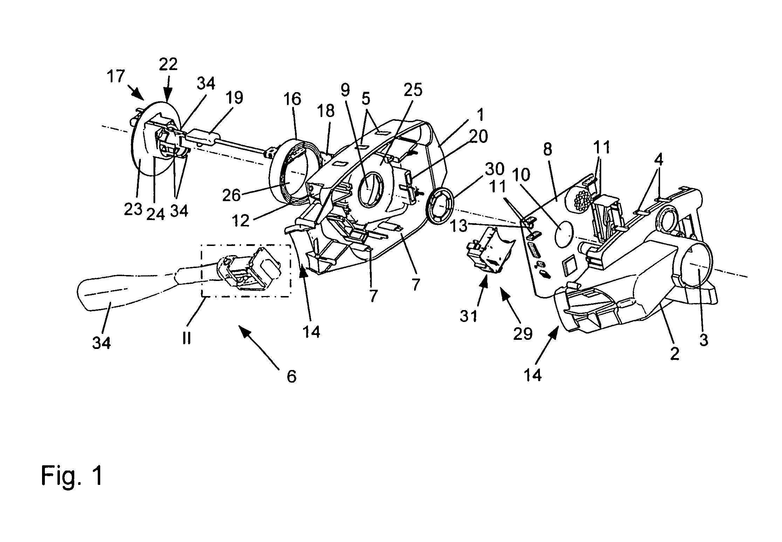

- Fig.1: eine Explosionsdarstellung eines Lenkstockschalters mit einem integrierten, verrastbaren Blinkerschalter, dem eine gattungsgemäße Rückstelleinrichtung zugeordnet ist,
- Fig.2: eine vereinfachte Schnittdarstellung der Einzelheit II gemäß Fig. 1, mit einer nicht erfindungsgemäßen Rückstelleinrichtung
- Fig.3: die Darstellung der Einzelheit II nach Fig. 2 in einer anderen Stellung des Schalthebels,
- Fig.4: die Darstellung der Einzelheit II nach Fig. 3 in einer weiteren Stellung des Schalthebels,
- Fig.5: eine erste nicht erfindungsgemäße alternative Ausgestaltung der Einzelheit II gemäß Fig. 1 in einer vereinfachten Schnittdarstellung,

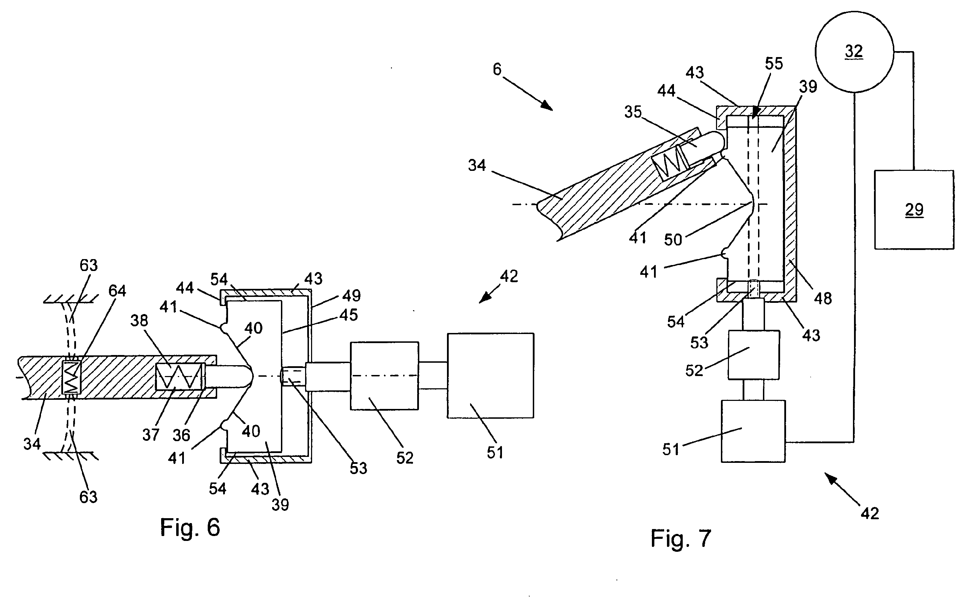

- Fig.6: eine erste erfindungsgemäße alternative Ausgestaltung der Einzelheit II gemäß Fig. 1 in einer vereinfachten Schnittdarstellung und
- Fig.7: eine zweite erfindungsgemäße alternative Ausgestaltung der Einzelheit II gemäß Fig. 1 in einer vereinfachten Schnittdarstellung.

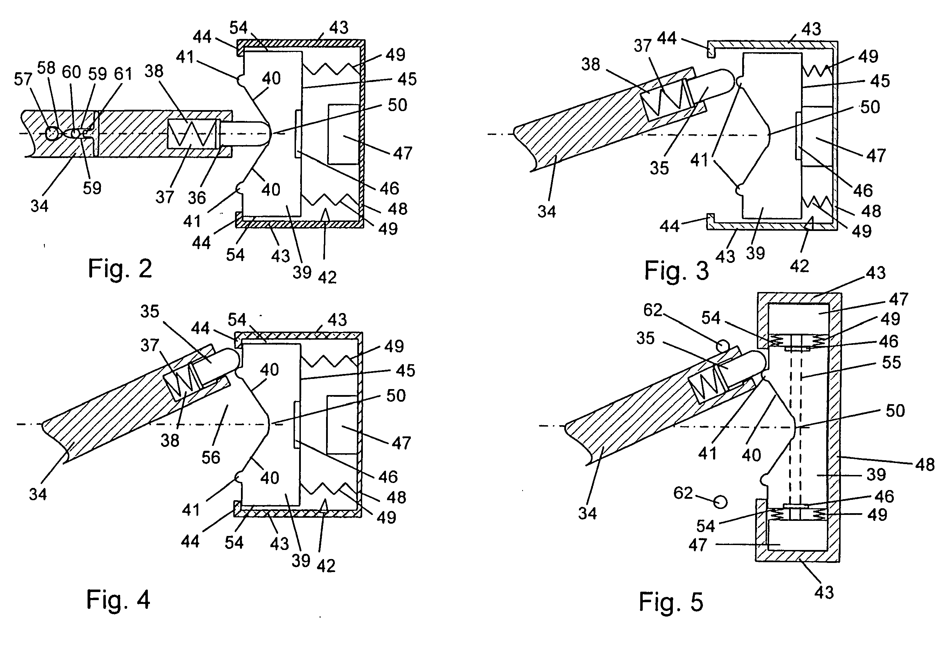

Die Fig. 2 bis 5 sind nicht von der Erfindung umfasst und dienen lediglich zu ihrer näheren Erläuterung.

Der Lenkstockschalter umfasst ein aus einem Gehäuseoberteil 1 und einem Gehäuseunterteil 2 zusammengesetztes Gehäuse, wobei an dem Gehäuseunterteil 2 eine zylindrische Ausnehmung 3 zur Befestigung des Lenkstockschalters an einem nicht dargestellten Mantelrohr eines Kraftfahrzeuges ausgeformt ist. Im weiteren umfasst das Gehäuseunterteil 2 randseitige Klipsarme 4, die beim Zusammenfügen des Gehäuseunterteils 2 und des Gehäuseoberteils 1 in korrespondierende Klipsöffnungen 5 des Gehäuseoberteils 1 eingreifen, sowie nicht dargestellte Zentrieröffnungen, in die entsprechende Zentrieransätze 7 des Gehäuseoberteils 1 eingesetzt werden. Schließlich ist dem Gehäuseunterteil 2 eine Leiterplatte 8 zugeordnet, die mit einem Bordnetz sowie einem Bordrechner 32 des Kraftfahrzeuges gekoppelt ist.

Die Leiterplatte 8 weist eine mit der Ausnehmung 3 des Gehäuseunterteils 2 sowie mit einer Bohrung 9 des Gehäuseoberteils 1 fluchtende zylindrische Öffnung 10 zur Durchführung einer nicht dargestellten Lenksäule auf, deren freies Ende oberhalb des Gehäuseoberteils 1 mit einem Lenkrad verbunden ist. Weiterhin ist die Leiterplatte 8 mit Anschlüssen 11 für im wesentlichen gegenüberliegende Schalter 6 versehen, von denen lediglich einer dargestellt ist. Der als Blinkerschalter ausgebildete verrastbare Schalter 6 weist einen Schalthebel 34 auf, der einen Durchbruch 12 des Gehäuseoberteils 1 durchragt und der mittels leiterplattenseitige Durchgangsbohrungen 13 durchdringenden Verschraubungen an dem Gehäuseunterteil 2 festgelegt ist. Ferner ist die Leiterplatte 8 mit einem Zündschloss verbunden, das in eine zwischen dem Gehäuseoberteil 1 und dem Gehäuseunterteil 2 gebildete Öffnung 14 eingesetzt wird.

Das das Gehäuseunterteil 2 randseitig übergreifende Gehäuseoberteil 1 weist eine Aussparung zur Aufnahme eines elektrischen Leiters 16 einer elektrischen Verbindungseinrichtung 17 auf, die das Lenkrad über die Leiterplatte 8 mit dem Bordnetz koppelt. Der flexibel ausgebildete Leiter 16 ist in mehreren Windungen spiralförmig aufgewickelt und jeweils endseitig mit einer Anschlusseinheit 18, 19 versehen, wobei die eine Anschlusseinheit 18 in eine Führungsausnehmung 20 des Gehäuseoberteils 1 eingesetzt und mit der Leiterplatte 8 gekoppelt ist. Die andere Anschlusseinheit 19, die mit dem Lenkrad in Verbindung steht, ist in eine Öffnung eines Deckels 22 eingesetzt, der zur lenkradseitigen Befestigung einen Flansch 23 umfasst, an dem ein Ansatz 24 koaxial angeformt ist. Der Flansch 23 des Deckels 22 überdeckt den Leiter 16, der sich auf einem von dem Gehäuseoberteil 1 ausgebildeten Boden 25 abstützt. Der Ansatz 24 ist drehbar in den Boden 25 eingesetzt, wobei der Ansatz 24 einen von dem Leiter 16 gebildeten Freiraum 26 durchragt. Die seitliche Begrenzung des Leiters 16 wird von einer sich von einer Gehäuseoberseite zu dem Boden 25 erstreckenden Wandung des Gehäuseoberteils 1 gebildet.

Um eine relative Änderung des Drehwinkels des Lenkrades gegenüber dem Lenkstockschalter festzustellen, ist zwischen der Verbindungseinrichtung 17 und dem Gehäuseoberteil 1 des Lenkstockschalters ein Lenkwinkelsensor 29 angeordnet, der im wesentlichen aus einem Rotor 30 und einem Stator 31 besteht, wobei der Stator 31 über die Leiterplatte 8 mit dem Bordrechner 32 gekoppelt ist.

Der Schalter 6 umfasst einen gehäuseseitig schwenkbar gelagerten Schalthebel 34 mit einem als Rasthülse 35 ausgebildeten Rastelement. An der Rasthülse 35 ist ein Bund 36 angeformt, der zusammen mit einer Druckfeder 37 in eine Stufenbohrung 38 des Schalthebels 34 unverlierbar eingesetzt ist.

Zur Verrastung des Schalthebels 34 in einer der Schaltstellungen des Schalters 6 wirkt die Rasthülse 35 mit einer gehäuseseitigen Rastkurve 39 zusammen. Die Rastkurve 39 ist im wesentlichen V-förmig gestaltet, wobei an den Enden der Schenkel 40 der V-Form kleine Nasen 41 ausgebildet sind und jede der Nasen 41 den Schalthebel 34 in einer seiner verrasteten Schaltstellungen hält. Um die Verrastung 56 des Schalthebels 34 aufzuheben, ist der Rastkurve 39 eine Verstelleinrichtung 42 zugeordnet. Damit der Schalthebel 34 stets in seine nicht verrastete Stellung zurückkehrt, ist an seinem Drehpunkt 57 eine Drehschenkelfeder 58 angeordnet, deren Schenkel 59 einen gehäusefesten Anschlag 60 sowie eine dem Schalthebel 34 zugeordnete Nase 61 umgreifen. Beim Verschwenken des Schalthebels 34 in eine verrastete Schaltstellung, wird die Drehschenkelfeder 58 gespannt und verschwenkt den Schalthebel 34 beim Aufheben der Verrastung 56 in seine Ausganglage. Ferner sind dem Schalthebel 34 gehäusefeste Anschläge 62 zugeordnet, die sein Verschwenken über eine vorbestimmte Endlage hinaus verhindern.

Die Rastkurve 39 ist zwischen Gehäusewänden 43 geführt, an deren freien Enden Anschläge 44 ausgebildet sind. In die Rückwand 45 der Rastkurve 39 ist eine metallische Platte 46 eingesetzt, die mit einem Elektromagneten 47 der Verstelleinrichtung 42 zusammenwirkt. Zwischen der Rückwand 45 der Rastkurve 39 und der korrespondierenden Gehäusewand 48, an der der Elektromagnet 47 befestigt ist, stützen sich Druckfedern 49 ab, die die Rastkurve 39 gegen die Anschläge 44 drücken. In dieser Stellung der Rastkurve 39 kann der Schalthebel 34 in eine verrastete Stellung verschwenkt werden, in der die Rasthülse 35 die zugeordnete Nase 41 der Rastkurve 39 hintergreift. Zum Aufheben der Verrastung 56 in Abhängigkeit von der Drehrichtung des Lenkrades erfasst der Bordrechner 32 die Daten des Lenkwinkelsensors 29 und spricht den Elektromagneten 47 an, der daraufhin die Platte 46 mitsamt der Rastkurve 39 entgegen der Wirkung der Druckfedern 49 anzieht, bis die Platte 46 auf dem Elektromagneten 47 zur Anlage kommt. Hierbei entfernt sich die Nase 41 der Rastkurve 39 hinter die Rasthülse 35 des Schalthebels 34 und dieser verschwenkt zwangsgesteuert in die nicht verrastete Stellung, in der die Rasthülse 35 in einem unteren Scheitelpunkt 50 der Rastkurve 39 einliegt. Nach einer vorgegebenen Zeitspanne oder nachdem der Bordrechner 32 registriert hat, dass sich der Schalthebel 34 in keiner der verrasteten Schaltstellungen befindet, beendet der Rechner die Stromzufuhr zu dem Elektromagneten 47 und die Rastkurve 39 gelangt unter der Wirkung der Druckfedern 49 wieder an die Anschläge 44 der Gehäusewände 43.

In einer nicht erfindungsgemäße alternativen Ausführung ist den gegenüberliegenden Seitenwänden 54 der Rastkurve 39 jeweils eine metallische Platte 46 zugeordnet und an den seitlichen Gehäusewänden 43 ist jeweils ein zu einer Platte 46 korrespondierender Elektromagnet 47 befestigt, wobei zwischen dem Elektromagneten 47 und der zugeordnete Seitenwand 54 vorgespannte Druckfedern 49 angeordnet sind. Die Rastkurve 39 ist mittels einer Führung 55 im wesentlichen senkrecht zu der Längsachse des Schalthebels 34 beweglich zwischen den seitlichen Gehäusewänden 43 gelagert. Befindet sich der Schalthebel 34 in einer der verrasteten Schaltstellungen des Schalters 6, in der die Rasthülse 35 die zugeordnete Nase 41 der Rastkurve 39 hintergreift und soll die Verrastung 56 aufgehoben werden, so spricht der Bordrechner 32 den Elektromagneten 47 an, der sich auf der der Verrastung 56 zugeordneten Seite des Schalters 6 befindet. Daraufhin zieht der Elektromagnet 47 die Platte 46 und somit auch die Rastkurve 39 entgegen der Wirkung der zugeordneten Druckfedern 49 an und die Rasthülse 35 gleitet zwangsgesteuert über die Nase 41 und dann auf dem entsprechenden Schenkel 40 der Rastkurve 39 in eine nicht verrastete Position, in der sie im Scheitelpunkt 50 in der Rastkurve 39 einliegt. Nach dem Aufheben der Verrastung 56 unterbricht der Bordrechner 32 die Stromzufuhr zu dem Elektromagnet 47 und die Rastkurve 39 kehrt unter der Wirkung der Druckfedern 49 in ihre Ausgangslage zurück, in der sie zwischen den entsprechend ausgelegten Druckfedern 37 gehalten wird.

Bei einer erfindungsgemäßen alternativen Ausgestaltung umfasst die Verstelleinrichtung 42 einen Elektromotor 51, der zum einen mit einem Getriebe 52 und zum anderen mit dem Bordrechner 32 gekoppelt ist. Das Getriebe 52 steht über eine Gewindestange 53 mit der Rastkurve 39 in Verbindung, wobei in die Rückwand 45 der Rastkurve 39 ein Gewinde für die Gewindestange 53 eingelassen ist. Bei einer entsprechenden Beaufschlagung des Elektromotors 51 durch den Bordrechner 32 bewegt dieser die Rastkurve 39 im wesentlichen parallel zur Längsachse des Schalthebels 34 kontinuierlich von demselben weg, bis die Rasthülse 35 über die entsprechende Nase 41 der Rastkurve 39 gleitet und die Verrastung 56 aufgehoben ist. Anschließend wird der Elektromotor 51 rechnergesteuert in eine umgekehrte Drehrichtung versetzt, worauf er die Rastkurve 39 wieder in Richtung des Schalthebels 34 transportiert, der dann durch entsprechendes Verschwenken eine verrastete Schaltstellung einnehmen kann.

Die Gewindestange 53 der Verstelleinrichtung 42 kann auch in eine Seitenwand 54 der Rastkurve 39 eingesetzt werden, wobei sowohl das Getriebe 52 als auch der Elektromotor 51 der korrespondierenden seitlichen Gehäusewand 43 zugeordnet werden. Der von dem Bordrechner 32 angesprochene Elektromotor 51 bewegt bei dieser Anordnung die Rastkurve 39 in der Führung 55 im wesentlichen senkrecht zur Längsachse des Schalthebels 34.

Im Weiteren sind zwei gegenüberliegende gehäusefeste Rippen 63 angedeutet, die auf eine in den Schalthebel 34 eingesetzte Druckfeder 64 wirken. Beim Verschwenken des Schalthebels 34 wird die Druckfeder 64 durch die entsprechende Rippe 63 vorgespannt. Wird die Verrastung des Schalthebels 34 aufgehoben, kehrt dieser aufgrund des Zusammenwirkens von vorgespannter Druckfeder 64 und entsprechender Rippe 63 in seine Ausgangslage zurück.

### Bezugszeichenliste

| | | | |
|---|---|---|---|
| 1. | Gehäuseoberteil | 42. | Verstelleinrichtung |
| 2. | Gehäuseunterteil | 43. | Gehäusewand |
| 3. | Ausnehmung | 44. | Anschlag |
| 4. | Klipsarm | 45. | Rückwand |
| 5. | Klipsöffnung | 46. | Platte |
| 6. | Schalter | 47. | Elektromagnet |
| 7. | Zentrieransatz | 48. | Gehäusewand |
| 8. | Leiterplatte | 49. | Druckfeder |
| 9. | Bohrung | 50. | Scheitelpunkt |
| 10. | Öffnung | 51. | Elektromotor |
| 11. | Anschluss | 52. | Getriebe |
| 12. | Durchbruch | 53. | Gewindestange |
| 13. | Durchgangsbohrung | 54. | Seitenwand |
| 14. | Öffnung | 55. | Führung |
| 15. | | 56. | Verrastung |
| 16. | Leiter | 57. | Drehpunkt |
| 17. | Verbindungseinrichtung | 58. | Drehschenkelfeder |
| 18. | Anschlusseinheit | 59. | Schenkel |
| 19. | Anschlusseinheit | 60. | Anschlag |
| 20. | Führungsausnehmung | 61. | Nase |
| 21. | | 62. | Anschlag |
| 22. | Deckel | 63. | Rippe |
| 23. | Flansch | 64. | Druckfeder |
| 24. | Ansatz | | |
| 25. | Boden | | |
| 26. | Freiraum | | |
| 27. | | | |
| 28. | | | |
| 29. | Lenkwinkelsensor | | |
| 30. | Rotor | | |
| 31. | Stator | | |
| 32. | Bordrechner | | |
| 33. | | | |
| 34. | Schalthebel | | |
| 35. | Rasthülse | | |
| 36. | Bund | | |
| 37. | Druckfeder | | |
| 38. | Stufenbohrung | | |
| 39. | Rastkurve | | |
| 40. | Schenkel | | |
| 41. | Nase | | |

## Patentansprüche

1. Rückstelleinrichtung für einen Schalter (6) eines Kraftfahrzeuges, insbesondere eines Blinkerschalters, mit einem schwenkbar gelagerten, verrastbaren Schalthebel (34) mit einem federbelasteten Rastelement, das mit mindestens einer Schaltstellung einer gehäuseseitigen Rastkurve (39) zusammenwirkt, wobei eine elektromechanische Verstelleinrichtung (42) rechnergesteuert die Verrastung (56) des Schalthebels (34) aufhebt, **dadurch gekennzeichnet, dass** die Verstelleinrichtung (42) einen Elektromotor (51) umfasst, der mit einem Getriebe (52) gekoppelt ist, das wiederum über eine Gewindestange (53) mit der Rastkurve (39) in Verbindung steht.

2. Rückstelleinrichtung nach Anspruch 1, **dadurch gekennzeichnet, dass** die Verstelleinrichtung (42) die Rastkurve (39) der Rastung beaufschlagt und im wesentlichen senkrecht oder parallel zu einer Längsachse des Schalthebels (34) wirkt.

3. Rückstelleinrichtung nach Anspruch 1 oder 2, **dadurch gekennzeichnet, dass** die Verstelleinrichtung (42) die Rastkurve (39) kontinuierlich oder mittels eines Impulses beaufschlagt.

4. Rückstelleinrichtung nach einem der Ansprüche 1 bis 3, **dadurch gekennzeichnet, dass** die Verstelleinrichtung (42) in ein Gehäuse des Schalters (6) integriert oder an demselben befestigt ist.

5. Rückstelleinrichtung nach Anspruch 1, **dadurch gekeinzeichnet, dass** die Drehrichtung des Elektromotors (51) rechnergesteuert umkehrbar ist.

6. Rückstelleinrichtung nach Anspruch 1, **dadurch gekennzeichnet, dass** die Gewindestange (53) in ein Innengewinde eingreift, das in eine Rückwand (45) oder eine Seitenwand (54) der Rastkurve (39) eingelassen ist.

7. Rückstelleinrichtung nach Anspruch 1 oder 5, **dadurch gekennzeichnet, dass** der Elektromotor (51) nach dem Lösen der Verrastung (56) des Schalthebels (34) die Rastkurve (39) rechnergesteuert in ihre Ausgangslage bewegt.

8. Rückstelleinrichtung nach einem der Ansprüche 1 bis 7, **dadurch gekennzeichnet, dass** ein Bordrechner (32) mit einem Lenkwinkelsensor (29) gekoppelt ist und die Verstelleinrichtung (42) in Abhängigkeit von einer Drehrichtung sowie einem Drehwinkel der Lenksäule die Rastkurve (39) betätigt.

9. Rückstelleinrichtung nach Anspruch 1, **dadurch gekennzeichnet, dass** das Rastelement mitsamt der zugeordneten Druckfeder (37) unverlierbar in dem Schalthebel (34) gehalten ist.

10. Rückstelleinrichtung nach Anspruch 9, **dadurch gekennzeichnet, dass** das als Rasthülse (35) ausgebildete Rastelement mit einem Bund (36) versehen und in eine stirnseitige Stufenbohrung (38) des Schalthebels (34) eingesetzt ist.

## Claims

1. Reset device for a switch (6) of a motor vehicle, in particular a traffic indicator switch, having a pivotably mounted, lockable switch lever (34) having a spring-loaded locking element acting in conjunction with at least one switching position of a locking curve (39) on the housing side, wherein an electromechanical repositioning device (42) under computer control cancels the engagement (56) of the switch lever (34), **characterised in that** the repositioning device (42) comprises an electric motor (51) coupled to a gear (52) which in turn is connected via a threaded pin (53) to the locking curve (39).

2. Reset device according to claim 1, **characterised in that** the repositioning device (42) acts upon the locking curve of the latching and acts substantially perpendicular or parallel to a longitudinal axis of the switch lever (34).

3. Reset device according to claim 1 or 2, **characterised in that** the repositioning device (42) acts upon the locking curve (39) continuously or by means of a pulse.

4. Reset device according to any of claims 1 to 3, **characterised in that** the repositioning device (42) is integrated into a housing of the switch (6) or fastened to the same.

5. Reset device according to claim 1, **characterised in that** the direction of rotation of the electric motor (51) is reversible under computer control.

6. Reset device according to claim 1, **characterised in that** the threaded pin (53) engages in an internal thread let into a back wall (45) or side wall (54) of the locking curve (39).

7. Reset device according to claim 1 or 5, **characterised in that** the electric motor (51) after release of the arrestment (56) of the switch lever (34) the locking curve (39) is moved under computer control into its starting position.

8. Reset device according to any of claims 1 to 7, **characterised in that** an onboard computer (32) is linked to a steering angle sensor (29) and the repositioning device (42) actuates the locking curve (39) as a function of a direction of rotation as well as an angle of rotation of the steering column.

9. Reset device according to claim 1, **characterised in that** the locking element together with the associated compression spring (37) is held captive in the switch lever (34).

10. Reset device according to claim 9, **characterised in that** the locking element constructed in the form of a locking thimble (35) is provided with a collar (36) and is inserted into a stepped bore (38) on the end face of the switch lever (34).

## Revendications

1. Dispositif de rappel pour un commutateur (6) d'un véhicule, en particulier un commutateur de clignotant, comprenant un levier de commutation enclenchable (34) monté à pivotement avec un élément d'encliquetage sollicité par un ressort, qui coopère avec au moins une position de commutation d'une came crantée (39) côté boîtier, un dispositif de réglage électromécanique annulant l'enclenchement (56) du levier de commutation (34) par commande d'ordinateur, **caractérisé en ce que** le dispositif de réglage (42) comprend un moteur électrique (51), qui est couplé à une transmission (52), qui est à son tour raccordée via une tige filetée (53) à la came crantée (39).

2. Dispositif de rappel selon la revendication 1, **caractérisé en ce que** le dispositif de réglage (42) sollicite la came crantée (39) de l'encliquetage et agit sensiblement perpendiculairement ou parallèlement à un axe longitudinal du levier de commutation (34).

3. Dispositif de rappel selon la revendication 1 ou 2, **caractérisé en ce que** le dispositif de réglage (42) sollicite la came crantée (39) en continu ou au moyen d'une impulsion.

4. Dispositif de rappel selon l'une quelconque des revendications 1 à 3, **caractérisé en ce que** le dispositif de réglage (42) est intégré à un boîtier du commutateur (6) ou fixé à celui-ci.

5. Dispositif de rappel selon la revendication 1, **caractérisé en ce que** le sens de rotation du moteur électrique (51) peut être inversé par commande d'ordinateur.

6. Dispositif de rappel selon la revendication 1, **caractérisé en ce que** la tige filetée (53) s'engage dans un filet interne qui est ménagé dans une paroi arrière (45) ou une paroi latérale (54) de la came crantée (39).

7. Dispositif de rappel selon la revendication 1 ou 5, **caractérisé en ce que** le moteur électrique (51), après dégagement de l'enclenchement (56) du levier de commutation (34), déplace la came crantée (39) dans sa position de départ par commande d'ordinateur.

8. Dispositif de rappel selon l'une quelconque des revendications 1 à 7, **caractérisé en ce qu'**un ordinateur de bord (32) est couplé à un capteur d'angle de direction (29) et le dispositif de réglage (42) actionne la came crantée (39) en fonction d'un sens de rotation ainsi que d'un angle de rotation de la colonne de direction.

9. Dispositif de rappel selon la revendication 1, **caractérisé en ce que** l'élément d'encliquetage est maintenu conjointement avec le ressort de compression affecté (37) dans le levier de commutation (34) de manière imperdable.

10. Dispositif de rappel selon la revendication 9, **caractérisé en ce que** l'élément d'encliquetage se présentant sous la forme d'une douille d'encliquetage (35) est pourvu d'une attache (36) et **en ce qu'**il est inséré dans un alésage étagé côté avant (38) du levier de commutation (34).
